# EUROPÄISCHE PATENTSCHRIFT

(11) **EP 3 721 096 B1**
(45) Veröffentlichungstag und Bekanntmachung des Hinweises auf die Patenterteilung: **18.05.2022**
(21) Anmeldenummer: 18825892.5
(22) Anmeldetag: 06.12.2018
(51) Int. Cl.: F15D 1/12, F15D 1/00, B05D 7/00, B63B 1/36, B32B 7/00, C09D 175/04, C09D 163/00, C09D 183/04, C09D 5/00

(54) **MISCHSCHICHT**
MIXED LAYER
COUCHE MÉLANGÉ

(30) Priorität: 07.12.2017 DE 102017129172
(43) Veröffentlichungstag der Anmeldung: 14.10.2020
(73) Patentinhaber: Fraunhofer-Gesellschaft zur Förderung der angewandten Forschung e.V., 80686 München (DE)
(72) Erfinder: FÖSTE, Volker, 28359 Bremen (DE); STENZEL, Volkmar, 28359 Bremen (DE); SCHREINER, Claus, 28359 Bremen (DE)
(74) Vertreter: Eisenführ Speiser
(86) Internationale Anmeldenummer: PCT/EP2018/083873
(87) Internationale Veröffentlichungsnummer: WO 2019/110762

(56) Entgegenhaltungen:
- WO-A1-87/03515
- WO-A2-2012/119965
- Cortona: "10 th Symposium on High-Performance Marine Vehicles", , 1. Oktober 2016 (2016-10-01), Seiten 187-192, XP055561021, Gefunden im Internet: URL:http://data.hiper-conf.info/Hiper2016_ Cortona.pdf in der Anmeldung erwähnt

## Beschreibung

Die Erfindung betrifft eine Mischschicht bestehend aus oder umfassend zwei Grundmaterialien, wobei beide Grundmaterialien gemeinsam ausgewählt sind aus der Gruppe bestehend aus Silikonen und Polyurethanen, wobei jedes Grundmaterial nach Aushärtung über eine bestimmte Shore A-Härte verfügt, die von dem anderen Grundmaterial verschieden ist.

Die Erfindung betrifft ferner ein Schichtsystem, umfassend eine Mischschicht und eine darauf angeordnete Deckschicht, wobei die Deckschicht bestimmte Eigenschaften hinsichtlich des E-Moduls, des Verlustfaktors tanδ und der Dichte besitzt. Die Erfindung betrifft ferner einen für Bewegung vorgesehenen Gegenstand mit einem entsprechenden Schichtsystem, die Verwendung des ersten und zweiten Grundmaterials zur Erzeugung einer Mischschicht sowie die Verwendung einer erfindungsgemäßen Mischschicht oder eines erfindungsgemäßen Schichtsystems zur Reibungsverringerung.

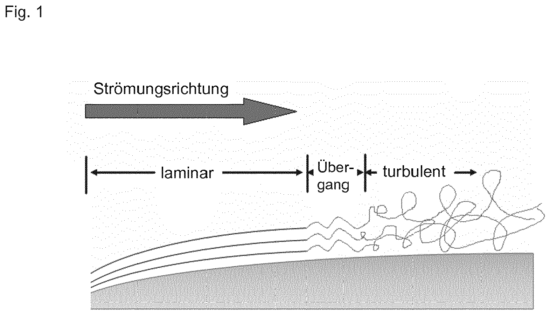

Der Strömungswiderstand bei Schiffen und Flugzeugen wird wesentlich von der Reibung zwischen dem Fluid und der festen Oberflache bestimmt, die zwischen 50 und 80% des Gesamtwiderstands ausmacht. Die Strömung an der Festkörperoberfläche ist in der Regel zunächst laminar und schlägt bei steigenden Reynoldszahlen in den turbulenten Zustand ("Transition") um. Im Bereich der Transition bilden sich Fluktuationen (sog. T-S Wellen), die durch die Strömung angefacht werden und zum Umschlag in den Turbulenten Zustand fuhren (vgl. Fig. 1). Im laminaren Zustand betragt die Reibung nur etwa 1/10 von der im turbulenten Zustand. Das bedeutet, dass, wenn man den laminaren Zustand länger erhalten kann, man die Reibung und somit den Gesamtwiderstand des Fahrzeugs signifikant senken kann.

In den 1950er Jahren wurden Versuche mit Gummischichten, welche mit einer bestimmten Struktur ("Noppen") aufgebracht wurden, die dann mit flüssigem Silikonöl gefüllt und mit einer dichten Deckschicht abgedeckt wurde. Diese Versuche ergaben eine signifikante Senkung des Strömungswiderstands um 60%, was aber seitdem trotz vieler Versuche nicht wieder reproduziert werden konnte. Die Versuche werden daher in der Literatur angezweifelt und der Ansatz wurde niemals technisch umgesetzt. Anschließend hat es immer wieder Versuche auf kleinen, ebenen Platten gegeben, die teilweise eine leichte Reduktion des Strömungswiderstandes ergeben haben. Keiner dieser Ansätze wurde auf einem schiffskörperähnlichen oder torpedoförmigen Substrat eingesetzt und geprüft, daher ist die Übertragbarkeit fraglich. Bei einigen dieser Versuche wurde Silikongummi eingesetzt und teilweise in einer ähnlichen komplizierten Noppenstruktur wie bei den ersten Versuchen in den 50ern.

Im Rahmen des abgeschlossenen Kooperationsprojekt FLIPPER wurde erstmals der Nachweis der Funktionsfähigkeit einer nachgiebigen Beschichtung auf einem Schiffskörper reproduzierbar und übereinstimmend mit den Ergebnissen einer numerischen Simulation nachgewiesen. Dabei wurde gezeigt, dass man durch eine nachgiebige Beschichtung mit genau definierten mechanischen Kenndaten (E-Modul, Verlustmodul, tanδ) die laminare Strömung stabilisieren kann. Die Beschichtungen setzten sich aus einer relativ weichen Unterschicht und einer härteren Deckschicht zusammen. Genaue Angaben dazu wurden jedoch nicht öffentlich. Die Berechnungen der Kenndaten wurde von der Hamburgischen Schiffbau Versuchsanstalt HSVA durchgeführt. Anhand von Versuchen an einem ca. 8m langen Schiffsmodell im Strömungskanal der HSVA wurde der Nachweis geführt, dass die Stabilisierung der laminaren Grenzschicht möglich ist und es wurde eine Senkung des Strömungswiderstands um rund 6% im Vergleich zu einer festen, nicht nachgiebigen Oberfläche nachgewiesen.

Ergebnisse aus dem Gemeinschaftsprojekt wurden auf den 10^{th} Symposium on High-Performance Marine Vehicles HIPER'16, Cortona, 17. bis 19. Oktober 2016, vorgestellt. In dem zu diesem Kongress erstellten "Book of abstracts", zugänglich z.B. über den Link http://data.hiper-conf.info/Hiper2016_Cortona.pdf wurde der Abstract *Lars-Uve Schrader, HSVA Hamburg Ship Model Basin, Hamburg*/*Germany, Drag Reduction for Ships: Drawing Inspiration from Dolphins* veröffentlicht. Diese Veröffentlichung wird im Rahmen dieses Textes auch als Literaturstelle 1 bezeichnet.

Nicht veröffentlicht wurden jedoch Angaben über die eingesetzten Materialien, für die Reibungsverringerung bzw. Hinweise, wie man besonders geeignete Materialien erzeugen kann.

WO 2012/119965 A2 und WO 87/03515 A1 offenbaren andere bekannten Mischschichten.

Vor diesem Hintergrund war es Aufgabe der vorliegenden Erfindung, geeignete Materialien für einen entsprechenden Reibungsreduktionsansatz anzugeben. Ein Schwerpunkt sollte dabei auf einer nachgiebigen Basisschicht liegen, die wesentlichen Einfluss die Reibungsreduktion haben kann.

Erfindungsgemäß gelöst wird diese Aufgabe durch eine Mischschicht bestehend aus oder umfassend zwei Grundmaterialien, wobei beide Grundmaterialien gemeinsam ausgewählt sind aus der Gruppe bestehend aus Silikonen und Polyurethanen, wobei das erste Grundmaterial in Reinform nach Aushärtung ein Festkörper mit einer Shore A-Härte ≤ 1 ist und das zweite Grundmaterial in Reinform nach Aushärtung ein Festkörper mit Shore-A-Härte von 25 bis 48, bevorzugt von 30 bis 45 weiter bevorzugt von 35 bis 42 und besonders bevorzugt von 41 ist.

Im Rahmen des vorliegenden Textes bedeutet die Formulierung, dass ein "Grundmaterial in Reinform nach Aushärtung einen Festkörper von einer Shore A-Härte von X" besitzt, dass dieses Grundmaterial - ohne eine Vermischung mit einem anderen Grundmaterial - nach vollständiger Aushärtung über die entsprechende Shore A-Härte verfügt und einem Festkörper bildet.

"Grundmaterial" bedeutet im Sinne dieses Textes ein aushärtbares Material, wobei der auszuhärtende Grundstoff entweder ein Silikon oder ein Polyurethan ist. Im Sinne der Anmeldung umfasst das Grundmaterial im Zweifelsfall auch weitere Komponenten, die für die Aushärtung zum jeweiligen Polymer notwendig sind.

Im Rahmen der Forschung der Anmelder hat sich überraschend herausgestellt, dass die erfindungsgemäß einzusetzenden Grundmaterialien besonders geeignet sind für den Reibungsverminderungsansatz mit einem Zweischichtaufbau, wie er in der Literaturstelle 1 vorgestellt wurde: Grundsätzlich besteht das Problem, dass für die Beschichtung variable mechanische Eigenschaften eingestellt werden müssen, da komplizierte Oberflächenstrukturen wie z.B. Schiffsrümpfe an verschiedenen Stellen unterschiedliche Anforderungen im Rahmen der Reibungsreduktion an die Reibungsreduktionsbeschichtung stellen. Mit dem erfindungsgemäßen Mischschichtsystem ist es möglich, über breite Bereiche die erforderlichen mechanischen Eigenschaften der Basisschicht bereitzustellen, ohne dass ein ständiger Materialwechsel erforderlich ist. So ist es möglich, Bereiche unterschiedlicher Shore-Härten aus den gleichen Grundmaterialien zusammenzustellen, wobei in einer bevorzugten Variante sogar ein fließender Übergang hergestellt werden kann.

Besonders überraschend war in diesem Zusammenhang, dass die erfindungsgemäßen Mischschichten sich - ohne an eine Theorie gebunden zu sein - aufgrund ihrer Ausgangsmaterialien besonders gut für den Zweck der Reibungsverminderung im Sinne der Literaturstelle 1 eigneten. Ebenfalls ohne an eine Theorie gebunden zu sein wird dies darauf zurückgeführt, dass neben den gewünschten Werten für die Härte auch weitere Nebenbedingungen auf diese Art erfüllt werden konnten, wie zum Beispiel ein geeigneter Wert für das Verlustmodul (tan*δ*), das mit der Anpassung der Härte ebenfalls sich offensichtlich so veränderte, dass weiterhin eine verbesserte Reibungsreduktion gegeben war. Dies war bei Standardmaterialien aus dem Stand der Technik überraschenderweise den gegenüber nicht der Fall. Insbesondere war überraschend, dass durch die Mischung der ausgewählten Materialien es möglich war, eine Schicht zu erzeugen, die einen geringen E-Modul aufweist in Kombination mit einer geringen Dämpfung.

Dabei hat sich zusätzlich eine überraschend gute Reproduzierbarkeit der mechanischen Eigenschaften gezeigt. Als besonders praktikabel hat sich dabei erwiesen, dass sowohl erste Grundmaterial als auch das zweite Grundmaterial ein 2-Komponenten System sind.

Mit 2-Komponenten Systemen ist es sehr gut möglich, eine ausreichende Mischung sicherzustellen und gleichzeitig den Aushärtungsprozess unter Kontrolle zu haben.

Erfindungsgemäß bevorzugt, kann es sein, dass die Mischschicht als drittes Grundmaterial ein Silikonöl umfasst oder aus den drei Grundmaterialien besteht.

Es hat sich im Rahmen der Entwicklung herausgestellt, dass mittels eines Silikonöls als dritter Komponente es besonders gut möglich ist, die gewünschten Materialeigenschaften für die erfindungsgemäße Mischschicht einzustellen. Dabei ist es erfindungsgemäß besonders bevorzugt, dass die Grundmaterialien sämtlich Silikone sind und noch weiter bevorzugt, dass sämtliche Grundmaterialien - seien es zwei oder drei - miteinander in beliebigen Verhältnissen mischbar sind.

Dabei bedeutet "miteinander mischbar", dass sich nur eine Phase nach dem Mischen bildet.

Somit besteht ein ideales Baukastensystem, mit dem für die Mischschicht für die besondere Reibungsreduktionsanwendung die gewünschten Eigenschaften eingestellt werden können.

Die erfindungsgemäße Mischschicht kann bevorzugt auch Verstärkungselemente umfassen, wie z.B. faserige Materialen wie CFK oder GFK-Fasern, Webe-, Wabenstrukturen, Makrostrukturen oder allgemeiner dreidimensionale Strukturen.

Teil der Erfindung ist auch ein Schichtsystem, umfassend eine Mischschicht nach einem der vorangehenden Ansprüche und darauf angeordnet eine Deckschicht, wobei die Deckschicht ein E-Modul von 100 bis 500 MPa, bevorzugt 200 bis 400 MPa, einem Verlustfaktor tanδ (bei 100 Hz) von 0,01 bis 0,3, bevorzugt 0,05 bis 0,2 und besonders bevorzugt 0,05 bis 0,12 und eine Dichte von 0,9 bis 1,1 g/cm³ bevorzugt 0,95 bis 1,01 g/cm³ besitzt.

Es hat sich im Rahmen der Forschung herausgestellt, dass ein Schichtsystem mit den entsprechenden Kenndaten der erfindungsgemäßen Mischschicht und einer dazu geeigneten Deckschicht in einem hohen Maße zu einer Reibungsreduktion führen kann.

Dabei ist es erfindungsgemäß bevorzugt, dass das Material der Deckschicht ausgewählt aus der Gruppe bestehend aus Polyolefinen insbesondere Polyethylen, Polypropylen oder EPDM; Polyestern, insbesondere Polyethylenterephthalat, Polyvinylhalogeniden; insbesondere PVC; und Polyamiden insbesondere PA 6.

Diese Materialien eignen sich besonders gut für eine Deckschicht im Rahmen des Reibungsreduktionsansatzes unter Einsatz der erfindungsgemäßen Mischschicht.

Erfindungsgemäß bevorzugt ist ein erfindungsgemäßes Schichtsystem, wobei die Mischschicht senkrecht zur Deckschicht homogen ist. Dies bedeutet, dass der im bevorzugten erfindungsgemäßen Schichtsystem eine Ebene senkrecht zum Verlauf der Oberfläche der Deckschicht vorliegen muss, in der die erfindungsgemäße Mischschicht homogen ist. Mit anderen Worten, es besteht durchaus die Möglichkeit, dass in einer hierzu gedrehten Ebene eine Homogenität nicht vorhanden ist, dies wäre z.B. der Fall, wenn ein Gradient eingesetzt wird und/oder Schichtabschnitte, z.B. in Form von dreidimensionalen "Kissen" die in sich jeweils homogen sind und zueinander heterogen sind.

Erfindungsgemäß bevorzugt ist ein erfindungsgemäßes Schichtsystem, wobei die Mischschicht eine Dicke von 1 bis 20 mm bevorzugt 3 bis 10 mm und/oder die Deckschicht eine Dicke von 50 bis 250 µm, bevorzugt 100 bis 200 µm besitzt.

Bei diesem bevorzugten Schichtsystem lassen sich die Eigenschaften erfindungsgemäße Mischschicht besonders gut nutzen.

Erfindungsgemäß bevorzugt ist ein erfindungsgemäßes Schichtsystem, wobei die Deckschicht ein Antifoulingmittel umfasst.

Antifoulingmittel sind dabei solche Mittel, die dazu geeignet sind, die Anlagerungen von Mikroorganismen (oder höheren Organismen) zu verringern oder zu verhindern. Antifoulingmittel können sowohl biozidhaltig (wie z. B. Zineb, Isothiazolinon, Kupferpyrithion, Tolylfluanid, Tralopyril oder Medetomidin) wie auch biozidfrei (fouling release-Prinzip) sein.

Das Antifoulingmittel im Rahmen des erfindungsgemäßen Schichtsystems ist besonders hilfreich für den Einsatz im Maritimbereich bzw. dort, wo Reibungsreduktion in Kombination mit Wasser gewünscht ist. Das Antifoulingmittel unterstützt nämlich die Sicherstellung einer laminaren Strömung, die anderenfalls durch sich anlagernde Mikroorganismen (oder auch höhere Organismen) gestört werden könnte.

Teil der Erfindung ist auch ein für Bewegung vorgesehener Gegenstand oder Bewegung ausgesetzter Gegenstand, umfassend ein erfindungsgemäßes Schichtsystem.

Solche Gegenstände können insbesondere aller Arten von Wasserfahrzeugen, Luft- und Landfahrzeugen sein wie z.B. Schiffe, U-Boote, Flugzeuge, Züge oder aber auch Turbinen, Windräder, Teile von wasserführenden Vorrichtungen wie z.B. Rohre oder strömungsausgesetzte fixe Bauteile wie z.B. Schleusentore.

Teil der Erfindung ist auch die Verwendung eines ersten erfindungsgemäß einzusetzenden Grundmaterials und eines zweiten erfindungsgemäß einzusetzenden Grundmaterials zur Erzeugung einer Mischschicht, umfassend diese Materialien oder bestehend daraus.

Wie bereits oben beschrieben, ist die durch die erfindungsgemäße Verwendung entstehende Mischschicht dabei besonders geeignet, an einer Reibungsreduzierung mitzuwirken.

Teil der Erfindung die Verwendung einer erfindungsgemäße Mischschicht oder eines erfindungsgemäßen Schichtsystems zur Reibungsverringerung.

Wie ebenfalls oben beschrieben, sind die erfindungsgemäßen einzusetzenden Materialien im entsprechenden Aufbau besonders geeignet, dass z.B. in der Literaturstelle 1 offenbarte Reibungsverringerungskonzept umzusetzen.

Beschrieben ist auch ein Verfahren zur Herstellen einer erfindungsgemäßen Mischschicht, umfassend die Schritte
a) Bereitstellen eines ersten Grundmaterials, wie oben beschrieben,
b) Bereitstellen eines zweiten Grundmaterials wie oben beschrieben,
c) ggf. Bereitstellen eines dritten Grundmaterials wie oben beschrieben,
d) Mischen der Grundmaterialien und
e) Aushärten der Grundmaterialien.

Dadurch wird eine erfindungsgemäße Mischschicht hergestellt.

Beschrieben ist auch ein Verfahren zum Beschichten eines für Bewegung vorgesehenen Gegenstandes oder Bewegung ausgesetzten Gegenstandes, insbesondere wie oben beschrieben, umfassend die Schritte
a) Bereitstellen oder Herstellen einer erfindungsgemäßen Mischschicht, insbesondere wie zuvor beschrieben,
b) Bereitstellen eines für Bewegung vorgesehenen oder Bewegung ausgesetzten Gegenstandes; und
c) Aufbringen der in Schritt a) bereitgestellten Mischschicht auf den Gegenstand.

Selbstverständlich ist es im Sinne der vorliegenden Erfindung bevorzugt, dass auf den entsprechenden Gegenstand ein erfindungsgemäßes Schichtsystem aufgebracht wird, daher ist es bevorzugt, dass die Verfahren zusätzlich die Schritte umfassen:
- Bereitstellen von Material für eine Deckschicht, insbesondere wie oben beschrieben:
- Aufbringen des Materials für die Deckschicht auf die Mischschicht und
- ggf. Aushärten des Materials für die Deckschicht.

Um die erfindungsgemäße Mischschicht bzw. das erfindungsgemäße Schichtsystem zum Einsatz zu bringen, kann es bevorzugt sein, die auf dem zu beschichteten Gegenstand zu beschichtende Stelle zunächst abzuformen, sodass die erfindungsgemäß einzusetzende Mischschicht ideal an die Oberfläche angepasst werden kann. Dies geschieht, indem sie in eine durch die Abformung erstellbare Form gegossen und dort ausgehärtet wird. Die Mischschicht wird auf den zu beschichtenden Gegenstand aufgebracht. Dabei kann es erfindungsgemäß bevorzugt sein, dass eine Haftvermittlerschicht zu den Oberflächen des zu beschichtenden Gegenstandes vorgesehen wird. Danach kann zum Beispiel in Form einer Folie, insbesondere einer LDPE-Folie, die über die Mischschicht gezogen wird, eine harte Oberfläche geschaffen werden. Hierbei wird der Fachmann geeignete Bedingungen einstellen, beispielsweise wäre es möglich, die Folie bei 143°C für 40 Sekunden zu erwärmen und dann so in die Form einzuspannen, dass sie per Unterdruck ideal die Formoberfläche bedeckt und nach Aushärtung ideal an die Oberfläche des zu beschichtenden Gegenstandes angepasst ist.

Wie bereits oben beschrieben, sind abhängig von der Oberflächenstruktur des zu beschichtenden Gegenstandes (bei dem eine Reibungsreduktion erwünscht ist) die Anforderungen an die erfindungsgemäße Mischschicht bzw. das erfindungsgemäße Schichtsystem unterschiedlich. Um dem entgegenzukommen, ist es möglich, (bevorzugt bereits angepasst an die konkrete Oberflächenausformung des beschichteten Gegenstandes) Bereiche der erfindungsgemäßen Mischschicht bzw. des erfindungsgemäßen Schichtsystems zu erzeugen, die in sich homogen sind, da dies den Herstellungsprozess erleichtert. Weitere entsprechende Abschnitte mit anderen Materialkennzahlen können folgen, sodass an den zu beschichtenden Gegenstand dann jeweils quasi abschnittsweise angepasste erfindungsgemäße Mischschichten bzw. erfindungsgemäße Schichtsysteme aufgebracht werden können.

Alternativ ist es auch möglich, die erfindungsgemäßen Mischschichten bzw. die erfindungsgemäßen Schichtsysteme so zu erzeugen, dass ein Gradient der Schichteigenschaften entlang der Anforderung der zu beschichtenden Oberfläche eingestellt wird. Dies ist vom Herstellungsprozess zwar komplizierter, führt aber zu einer ideal angepassten Beschichtung im Sinne des Zieles einer Reibungsreduktion. Nur der Vollständigkeit halber wird erwähnt, dass die erwünschten Materialeigenschaften an den jeweiligen Stellen des zu beschichtenden Gegenstandes beispielsweise so wie in der Literaturstelle 1 beschrieben bestimmt werden können.

Grundsätzlich ist zu erwähnen, dass das Erstellen von Beschichtungsabschnitten den Vorteil hat, dass diese nicht vor Ort hergestellt werden müssen und gut handhabbar sind.

Grundsätzlich steht dem Fachmann eine Reihe von Erzeugungsmöglichkeiten für die erfindungsgemäße Mischschicht bzw. das erfindungsgemäße Schichtsystem zu Verfügung, erwähnt sei nur Spritzguss, allgemeine Gießverfahren oder Spritzapplikation Airless).

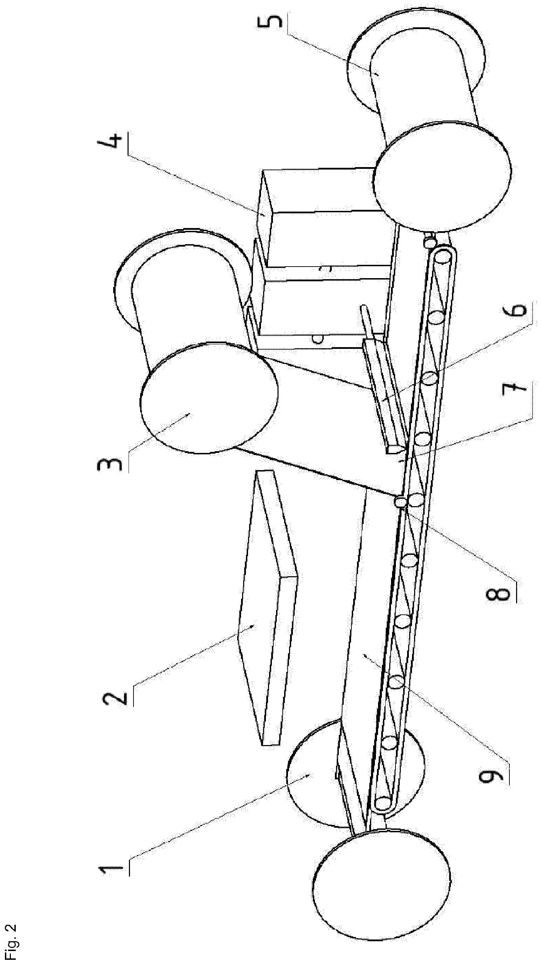

Die erfindungsgemäße Mischschicht bzw. das erfindungsgemäße Schichtsystem kann auch als Bahnware hergestellt werden. Hierzu wird auf die Figur 2 verwiesen:
Fig. 2 stellt ein System für die Herstellung der erfindungsgemäß einzusetzenden Materialien als Bahnware schematisch dar: Dabei bedeuten die Bezugszeichen
1. Aufnahmevorrichtung für fertiges Material
2. Heizeinrichtung für beschleunigte Härtung
3. Vorlage für Klebe- oder Schutzfolie
4. Vorratsbehälter und Steuerungstechnik zu variablen Mischung der Grundmaterialien
5. Vorlage für Deckschicht
6. Auftragvorrichtung für die Grundmaterialien
7. Aufgetragene Mischschicht
8. Formgebendes Förderband
9. Rakel zur Schichtdicken-Steuerung

In ein muldenartiges Förderband 8 werden die Grundmaterialien mittels eines Gussverfahrens oder per Breitschlitzdüse (Auftragsvorrichtung 6) gefüllt. Eine Folie, die als Deckschicht dient, hier eine PE-Folie, wird vor dem Befüllvorgang in das Förderband 8 eingelegt. Über das Förderband kann der fertige Strang fortlaufend abtransportiert werden. Um die Wegstrecke kurzzuhalten, bietet sich eine beschleunigte Härtung an, die beispielweise mittels einer Heizvorrichtung 2 erfolgen kann. Die Mischung der Komponenten wird mittels der Steuerungstechnik 4 zeitabhängig bewirkt. Dadurch kann das Mischungsverhältnis der Komponenten zueinander verändert werden. Dadurch wird eine kontinuierliche und gezielte Veränderung über die Fertigungslänge zur Erzeugung der relevanten Materialdaten herbeigeführt.

Am Ende des Förderbandes kann das erfindungsgemäße Schichtsystem mittels der Aufnahmevorrichtung 1 aufgewickelt werden. Das Schichtsystem kann über eine Klebe-und/oder Schutzfolie zusätzlich noch stabilisiert werden bzw. für den Einsatz vorbereitet werden. Diese Folie kann nach dem Auftrag des Materials für die Mischschicht von der Vorratsrolle 3 aufgebracht werden. Die Dicke der Mischschicht wird beispielweise über ein Rakel 9 gewährleistet. Das entstehende Schichtsystem kann zusätzlich mechanisch in Form gebracht werden und chemisch zum Beispiel durch Kleben oder mechanisch zum Beispiel durch Klemmen, Schweißen oder Schrauben mit dem Substrat, für das Reibungsreduktion gewünscht ist und/oder zu benachbarten Bahnen verbunden werden.

Grundsätzlich ist es auch möglich, Objekte vor Ort zu beschichten. Dabei kann mit einer Spritzapplikation zum Beispiel über ein Airlessverfahren oder ein Auftragsverfahren mittels Breitschlitzdüse das Material für die Mischschicht aufgebracht werden. In beiden Fällen sollte eine kurze Verarbeitungszeit oder eine hohe Standfestigkeit des Materials gegeben sein, um entsprechende Schichtdicken zu erzeugen. Dies kann durch additive oder thermische Beschleunigung bei der Aushärtung realisiert werden.

Während des Fertigungsprozesses können alle zwei oder drei Komponenten unabhängig im Mischungsverhältnis verändert werden. Dies bewirkt, dass eine kontinuierliche und gezielte Veränderung über die Fertigungslänge der relevanten Materialien realisiert werden kann.

Sobald die Mischschicht ausreichend ausgehärtet ist, kann die Deckschicht aufgebracht werden. Die Deckschicht kann als Folie aufgetragen werden, was beispielsweise mittels einer Rolle blasenfrei erfolgen kann.

Alternativ kann die Deckschicht als Flüssigkeitsfilm aufgetragen werden, dabei wird die Flüssigkeit auf die Mischschicht aufgesprüht. Ein solcher Auftrag kann beispielsweise im Heißspritzverfahren erfolgen.

Grundsätzlich stehen dem Fachmann eine Vielzahl von Möglichkeiten zur Applikation der erfindungsgemäßen Mischschicht und des erfindungsgemäßen Schichtsystems zu Verfügung. Dabei wird er je nach gewünschtem Einsatzweck und nach gewünschten Aufbringverfahren eine *in situ*-Applikation, d. h. direkt am Objekt, oder aber eine Vorfertigung wählen.

### Beispiel:

Die Mischschicht wird durch Mischung der beiden additionsvernetzenden Silikonpolymere Alpa Gel (erstes Grundmaterial; Mischungsverhältnis Komponente A : Komponente B = 1:1 nach Gewicht, Cimco Werkzeugfabrik Carl Jul. Müller GmbH & Co. KG, Remscheid, bezogen über POLYchem Handelsges.m.b.H, Gewerbeweg 7, A-7411 Markt Allhau) und Köraform A 42 (zweites Grundmaterial; Mischungsverhältnis Komponente A : Komponente B = 10:1 nach Gewicht, CHT R. Beitlich GmbH, Geretsried, bezogen über POLYchem Han-delsges.m.b.H, Gewerbeweg 7, A-7411 Markt Allhau) erzeugt. Beide Silikonpolymere vernetzen Platin-katalysiert bei Raumtemperatur.

Mischung von Köraform A 42 und Alpa Gel 1:1 nach Gewicht

Es werden 2.0 kg der Komponente A und 0,2 kg der Komponente B des Köraform A42 (Mischungsverhältnis 10:1 n.Gew.) in einem geeigneten Behälter vorgelegt und durch Rühren mittels Vakuum-Dissolver für 10 Minuten homogen gemischt.

In einem separaten Reaktionsbehälter werden 1.1 kg der Komponente A und 1.1 kg der Komponete B des Alpa Gel (Mischungsverhältnis 1:1 n. Gew.) vorgelegt und unter Rühren mittels Vakuum-Dissolver für 5 Minuten homogen gemischt.

Anschließend werden beide Silikonansätze vereinigt und mittels Vakuum-Dissolver für 5 Minuten homogenisiert.

Die Entlüftung der Silikonmischung wird durch Verwendung eines Vakuum-Dissolvers sichergestellt.

Nachdem die vollständige Freiheit der Mischung von Lufteinschlüssen gewährleistet ist, wird das fließfähige Material in die horizontal wie vertikal exakt ausgerichtete Form mit definierter Tiefe gegossen. Sollten sich im Rahmen des Eingießvorgangs Lufteinschlüsse im Material bilden, so muss die Silikonmischung mit einem Luftstrahl von ca. 500°C kurzzeitig bedüst werden. Nachfolgend wird 12 Stunden bei Raumtemperatur ausgehärtet.

Die eingesetzte Form entsprach einem Teil des 3,2:1 Schiffsmodells, das in der Literaturstelle 1 verwendet wurde, sodass durch die ausgehärtete Mischschicht resultierend ein Oberflächenabschnitt des Modells bedeckt werden konnte. Die resultierende Schichtdicke der erfindungsgemäßen Mischschicht war 10 mm.

Hierauf wurde eine LDPE-Folie (Faltenbeutel LDPE der Firma RAJAPACK GmbH, 76260 Ettlingen) mit einer Dicke von 160µm als Deckschicht aufgebracht (tiefgezogen wie weiter oben beschrieben). Anschließend wurde das so als erfindungsgemäßes Schichtsystem vorbereitete Bugsegment an den Modelrumpf angebracht. Dies wurde mit anderen Bugsegmenten ebenfalls gemacht, bis eine geschlossene Beschichtung vorlag. Diese Beschichtung war wasserdicht über die Deckschicht ausgeführt.

Die in der Literaturstelle 1 beschriebenen Strömungsversuche wurden analog durchgeführt und es ergab sich eine Widerstandsreduktion um rund 6% im Vergleich zu einem Bugsegment, welches nicht mit dem erfindungsgemäßen Schichtsystem versehen wurde.

Das im Beispiel eingesetzte erfindungsgemäße Mischmaterial besitzt zudem eine Oberflächenbeschaffenheit (eine ausreichende Reibwiderstandsfähigkeit/Klebrigkeit), die sich für die beschriebene Anwendung in Kombination mit der LDPE-Folie als vorteilhaft erwies. Es wurde eine ausreichende Adhäsion zwischen der Folie und der Mischschicht erzeugt, ohne dass eine weitere haftungsverstärkende Komponente wie z. B. ein Klebstoff verwendet werden musste.

### Vergleichsbeispiel

Analog zum erfindungsgemäßen Beispiel wurden Schichten aus den jeweils Einzelmaterialien A und Alpa Gel und verschiedene Mischungen aus Alpa Gel und Köraform (erfindungsgemäß) hergestellt. Dies erfolgte nach Herstellerangaben bzw. analog wie oben beschrieben. Der Gießvorgang erfolgte ebenso wie im erfindungsgemäßen Beispiel und auch die eingesetzte Form war die gleiche. Es stellte sich aber heraus, dass sehr viel geringere Reibungsreduktionswerte im nachfolgend durchgeführten Strömungsversuch (vergleiche oben) erzielt werden konnten, wenn nur eine Unterschicht aus Alpa Gel eingesetzt wurde.

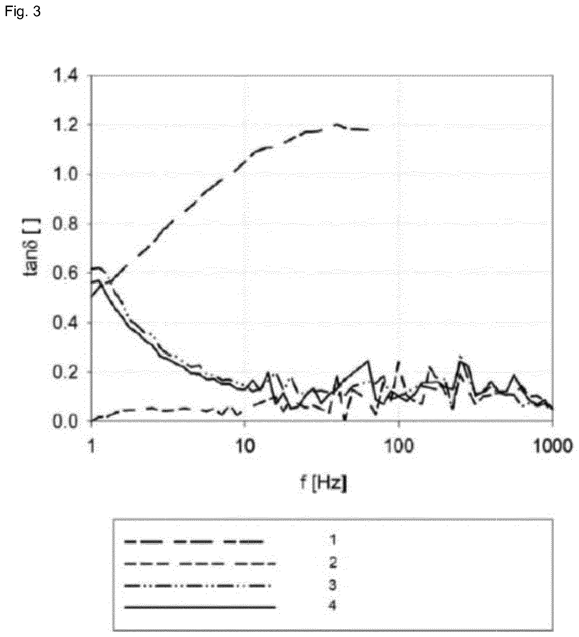

Nachfolgend wurden die Materialien, die im Vergleichsbeispiel untersucht wurden, hinsichtlich des Verlustfaktorstanδ näher untersucht. Hierzu wurde eine dynamisch mechanische Analyse (DMA) durchgeführt, wobei das Gerät DAM 2980 von Texas Instruments verwendet wurde. Um mit diesem Gerät die Materialkennwerte im interessanten Frequenzbereich von 100 Hz zu messen, wurden über das Zeit-Temperaturverschiebungsprinzip bei tiefen Temperaturen gemessene Werte auf höhere Frequenzbereiche proeiziert. Auf dieser Weise wurden die Ergebnisse der Figur 3 ermittelt.

Die Figur 3 stellt die Ergebnisse der Verlustfaktormessung (tanδ) dar, wobei die Messung mit den nachfolgenden Nummern jeweils die ebenfalls nachfolgend beschriebene Schicht betraf.
1 100 Gew.-% Alpa Gel
2 40 Gew.-% Alpa Gel plus 60 Gew.-% Köraform
3 50 Gew.-% Alpa Gel plus 50 Gew.-% Köraform
4 60 Gew.-% Alpa Gel plus 50 Gew.-% Köraform

Insbesondere die Werte für den Verlustfaktor tanδ erwiesen sich im Frequenzbereich ω von 100 Hz für die erfindungsgemäßen Mischschichten als konstant erfreulich niedrig (kleiner als 0,4), während die entsprechenden Werte für die Schicht aus 100 % Alpa Gel einen tanδ Wert von größer als 1 aufwiesen.

Dementsprechend ist es bevorzugt, dass die erfindungsgemäße Mischung bei einer Frequenz ω von 100 Hz einen tanδ Wert von ≤ 1,0, bevorzugt ≤ 0,8 weiter bevorzugt ≤ 0,6 und besonders bevorzugt ≤ 0,5 besitzt.

## Patentansprüche

1. Mischschicht bestehend aus oder umfassend zwei Grundmaterialien, wobei beide Grundmaterialien gemeinsam ausgewählt sind aus der Gruppe bestehend aus Silikonen und Polyurethanen, **dadurch gekennzeichnet, dass** das erste Grundmaterial in Reinform nach Aushärtung ein Festkörper mit einer Shore A-Härte ≤ 1 ist und
das zweite Grundmaterial in Reinform nach Aushärtung ein Festkörper mit Shore-A-Härte von 25 bis 48, bevorzugt von 30 bis 45 weiter bevorzugt von 35 bis 42 und besonders bevorzugt von 41 ist.

2. Mischschicht nach Anspruch 1, wobei sowohl das erste Grundmaterial als auch das zweite Grundmaterial ein 2-Komponenten System sind.

3. Mischschicht nach Anspruch 1 oder 2, wobei die Mischschicht als drittes Grundmaterial ein Silikonöl umfasst oder aus den drei Grundmaterialien besteht.

4. Mischschicht nach einem der vorangehenden Ansprüche, wobei die Grundmaterialien Silikone sind.

5. Mischschicht nach einem der vorangehenden Ansprüche, wobei die Grundmaterialien miteinander in beliebigem Verhältnis mischbar sind.

6. Schichtsystem, umfassend eine Mischschicht nach einem der vorangehenden Ansprüche und darauf angeordnet eine Deckschicht, wobei die Deckschicht ein E-Modul von 100 bis 500 MPa, bevorzugt 200 bis 400 MPa, einem Verlustfaktor tanδ von 0,01 bis 0,3, bevorzugt 0,05 bis 0,2 und besonders bevorzugt 0,05 bis 0,12 und eine Dichte von 0,9 bis 1,1 g/cm3 bevorzugt 0,95 bis 1,01 g/cm3 besitzt.

7. Schichtsystem nach Anspruch 6, wobei das Material der Deckschicht ausgewählt ist aus der Gruppe bestehend aus Polyolefinen insbesondere Polyethylen, Polypropylen oder EPDM; Polyestern, insbesondere Polyethylenterephthalat; Polyvinylhalogeniden insbesondere PVC; und Polyamiden insbesondere PA 6.

8. Schichtsystem nach Anspruch 6 oder 7, wobei die Mischschicht senkrecht zur Deckschicht homogen ist.

9. Schichtsystem nach einem der Ansprüche 6 bis 8, wobei die Mischschicht eine Dicke von 1 bis 20 mm bevorzugt 3 bis 10 mm und/oder die Deckschicht eine Dicke von 50 bis 250 µm, bevorzugt 100 bis 200 µm besitzt.

10. Schichtsystem nach einem der Ansprüche 6 bis 9, wobei die Deckschicht ein Antifoulingmittel umfasst.

11. Für Bewegung vorgesehener Gegenstand oder Bewegung ausgesetzter Gegenstand, umfassend ein Schichtsystem nach einem der Ansprüche 6 bis 10.

12. Verwendung eines ersten Grundmaterials wie in einem der Ansprüche 1 bis 5 definiert und eines zweiten Grundmaterials wie in einem der Ansprüche 1 bis 5 definiert zur Erzeugung einer Mischschicht, umfassend diese Materialien oder daraus bestehend.

13. Verwendung einer Mischschicht nach einem der Ansprüche 1 bis 5 oder eines Schichtsystems nach einem der Ansprüche 6 bis 10 zur Reibungsverringerung.

## Claims

1. Hybrid layer consisting of or comprising two base materials, where both base materials are jointly selected from the group consisting of silicones and polyurethanes, **characterized in that**
the first base material in pure form after curing is a solid having a Shore A hardness ≤ 1 and
the second base material in pure form after curing is a solid of Shore A hardness from 25 to 48, preferably from 30 to 45, more preferably from 35 to 42 and very preferably of 41.

2. Hybrid layer according to Claim 1, where both the first base material and the second base material are a 2-component system.

3. Hybrid layer according to Claim 1 or 2, where the hybrid layer comprises a silicone oil as third base material or consists of the three base materials.

4. Hybrid layer according to any of the preceding claims, where the base materials are silicones.

5. Hybrid layer according to any of the preceding claims, where the base materials can be mixed with one another in any desired proportion.

6. Layer system comprising a hybrid layer according to any of the preceding claims and disposed thereon an outer layer, where the outer layer possesses a modulus of elasticity of 100 to 500 MPa, preferably 200 to 400 MPa, a loss factor tan5 of 0.01 to 0.3, preferably 0.05 to 0.2 and more preferably 0.05 to 0.12 and a density of 0.9 to 1.1 g/cm3, preferably 0.95 to 1.01 g/cm3.

7. Layer system according to Claim 6, where the material of the outer layer is selected from the group consisting of polyolefins, more particularly polyethylene, polypropylene or EPDM; polyesters, more particularly polyethylene terephthalate; polyvinyl halides, more particularly PVC; and polyamides, more particularly PA6.

8. Layer system according to Claim 6 or 7, where the hybrid layer is homogenous perpendicular to the outer layer.

9. Layer system according to any of Claims 6 to 8, where the hybrid layer possesses a thickness of 1 to 20 mm, preferably 3 to 10 mm, and/or the outer layer possesses a thickness of 50 to 250 µm, preferably 100 to 200 µm.

10. Layer system according to any of Claims 6 to 9, where the outer layer comprises an antifouling agent.

11. Article intended for motion or article subject to motion, comprising a layer system according to any of Claims 6 to 10.

12. Use of a first base material as defined in any of Claims 1 to 5 and of a second base material as defined in any of Claims 1 to 5 for producing a hybrid layer comprising or consisting of these materials.

13. Use of a hybrid layer according to any of Claims 1 to 5 or of a layer system according to any of Claims 6 to 10 for reducing friction.

## Revendications

1. Couche mixte constituée de ou comprenant deux matériaux de base, dans laquelle les deux matériaux de base sont choisis conjointement parmi le groupe constitué de silicones et de polyuréthanes, **caractérisée en ce que**
le premier matériau de base est dans sa forme pure après durcissement un corps solide avec une dureté Shore A ≤ 1, et
le second matériau de base est dans sa forme pure après durcissement un corps solide avec une dureté Shore A de 25 à 48, de manière préférée de 30 à 45, de manière davantage préférée de 35 à 42 et de manière particulièrement préférée de 41.

2. Couche mixte selon la revendication 1, dans laquelle à la fois le premier matériau de base et le second matériau de base sont un système à deux composants.

3. Couche mixte selon la revendication 1 ou 2, dans laquelle la couche mixte comprend en tant que troisième matériau de base une huile de silicone ou est constituée des trois matériaux de base.

4. Couche mixte selon l'une quelconque des revendications précédentes, dans laquelle les matériaux de base sont des silicones.

5. Couche mixte selon l'une quelconque des revendications précédentes, dans laquelle les matériaux de base peuvent être mélangés les uns avec les autres selon un rapport quelconque.

6. Système de couches comprenant une couche mixte selon l'une quelconque des revendications précédentes et, disposée dessus, une couche de recouvrement, dans lequel la couche de recouvrement possède un module d'élasticité de 100 à 500 MPa, de manière préférée de 200 à 400 MPa, un facteur de perte tan5 de 0,01 à 0,3, de manière préférée de 0,05 à 0,2 et de manière particulièrement préférée de 0,05 à 0,12 et une densité de 0,9 à 1,1 g/cm³, de manière préférée de 0,95 à 1,01 g/cm³.

7. Système de couches selon la revendication 6, dans lequel le matériau de la couche de recouvrement est choisi parmi le groupe constitué de polyoléfines, en particulier de polyéthylène, de polypropylène ou d'EPDM ; de polyesters, en particulier de polytéréphtalate d'éthylène ; de polyhalogénures de vinyle, en particulier de PVC ; et de polyamides, en particulier de PA 6.

8. Système de couches selon la revendication 6 ou 7, dans lequel la couche mixte est homogène de manière perpendiculaire par rapport à la couche de recouvrement.

9. Système de couches selon l'une quelconque des revendications 6 à 8, dans lequel la couche mixte possède une épaisseur de 1 à 20 mm, de manière préférée de 3 à 10 mm et/ou la couche de recouvrement possède une épaisseur de 50 à 250 µm, de manière préférée de 100 à 200 µm.

10. Système de couches selon l'une quelconque des revendications 6 à 9, dans lequel la couche de recouvrement comprend un agent antisalissure.

11. Objet prévu pour le déplacement ou objet exposé à un déplacement, comprenant un système de couches selon l'une quelconque des revendications 6 à 10.

12. Utilisation d'un premier matériau de base tel que défini dans l'une quelconque des revendications 1 à 5 et d'un deuxième matériau de base tel que défini dans l'une quelconque des revendications 1 à 5 pour produire une couche mixte, comprenant lesdits matériaux ou constituée de ceux-ci.

13. Utilisation d'une couche mixte selon l'une quelconque des revendications 1 à 5 ou d'un système de couches selon l'une quelconque des revendications 6 à 10 pour la réduction du frottement.
